# EUROPEAN PATENT SPECIFICATION

(11) **EP 3 024 649 B1**
(45) Date of publication and mention of the grant of the patent: **01.09.2021**
(21) Application number: 14744833.6
(22) Date of filing: 28.07.2014
(51) Int. Cl.: B32B 5/10, B32B 5/26, B32B 5/28, B32B 17/04, B29C 70/80, B29C 70/20, C08J 5/24, C08K 5/00, C08L 63/00, F03D 1/06, F03D 3/04

(54) **IMPROVEMENTS IN OR RELATING TO FIBRE REINFORCED COMPOSITES**
VERBESSERUNGEN AN ODER IM ZUSAMMENHANG MIT VERSTÄRKTEN VERBUNDWERKSTOFFEN
PERFECTIONNEMENTS APPORTÉS OU SE RAPPORTANT À DES COMPOSITES RENFORCÉS PAR DES FIBRES

(30) Priority: 26.07.2013 GB 201313420
(43) Date of publication of application: 01.06.2016
(73) Proprietor: Hexcel Composites Limited, Duxford, Cambridgeshire CB22 4QD (GB)
(72) Inventor: HADLEY, Philip, Ely Cambridgeshire CB6 2WR (GB); WHITER, Mark, Saffron Walden Cambridgeshire CB11 4AX (GB); HARRINGTON, Chris, Buckland Hertfordshire SG9 0PX (GB)
(74) Representative: TLIP Limited
(86) International application number: PCT/EP2014/066209
(87) International publication number: WO 2015/011297

(56) References cited:
- EP-A1- 1 279 688
- WO-A1-2006/005559
- WO-A1-2013/093065
- WO-A1-2014/001537
- WO-A2-01/00405
- JP-A- S53 125 475
- US-A1- 2009 314 523

## Description

The present invention relates to the production of laminar structures by laying up a stack of layers of curable structures in a mould and causing the stack of structures to cure. The invention is particularly concerned with the production of resin based fibre reinforced structures from fibre impregnated with a curable resin such an epoxy resin. Such layers of curable structures in which the resin is uncured are sometimes known as prepregs. In one embodiment the invention is concerned with the production of wind turbine structures, such as shells for the blades of the turbine and spars that support the blades.

The present invention therefore relates to fibre reinforced materials and in particular to prepregs comprising fibres and thermosetting resins which may be stacked to form a preform and subsequently cured to form a reinforced composite material. Such composite materials are known, they are lightweight and of high strength and are used in many structural applications such as in the automobile and aerospace industries and in industrial applications such as wind turbine components such as spars and the shells used to make the blades.

Prepreg is the term used to describe fibres and fabric impregnated or in combination with a resin in the uncured state and ready for curing. The fibres may be in the form of tows or fabrics and a tow generally comprises a plurality of thin fibres called filaments. The fibrous materials and resins employed in the prepregs will depend upon the properties required of the cured fibre reinforced material and also the use to which the cured laminate is to be put. The fibrous material is described herein as structural fibre. The resin may be combined with fibres or fabric in various ways. The resin may be tacked to the surface of the fibrous material. The resin may partially or completely impregnate the fibrous material. The resin may impregnate the fibrous material so as to provide a pathway to facilitate the removal of air or gas during processing of the prepreg material.

Various methods have been proposed for the production of prepregs, one of the preferred methods being the impregnation of a moving fibrous web with a liquid, molten or semi-solid uncured thermosetting resin. The prepreg produced by this method may then be cut into sections of the desired length and a stack of the sections cured by heating to produce the final fibre reinforced laminate. Curing may be performed in a vacuum bag which may be placed in a mould for curing as is preferred in the manufacture of wind energy structures such as shells for the blades and spars. Alternatively, the stack may be formed and cured directly in a mould.

One preferred family of resins for use in such applications are curable epoxy resins and curing agents and curing agent accelerators are usually included in the resin to shorten the cure cycle time. Epoxy resins are highly suitable resins although they can be brittle after cure causing the final laminate to crack or fracture upon impact and it is therefore common practice to include toughening materials such as thermoplastics or rubbers in the epoxy resin.

Conventionally prepregs comprise a fabric impregnated with a homogenous mixture of a thermosetting polymer and a curing agent, they cannot be stored at ambient temperatures because they will slowly proceed to cure. Instead prepregs require cold storage to minimise any change in the resin that occurs in storage. The necessity for prepregs to be stored and transported in cold storage facilities is a major inconvenience associated with the use of prepregs. The duration for which a prepreg can be stored is referred to as its 'outlife'. Outlife indicates how long a prepreg can be stored for before the resin has cured to such an extent that it is no longer suitable for use.

Prepregs comprising thermosetting resins also need to balance the reactivity of the resin with outlife requirements of the prepreg. It is important to increase the reactivity of a resin to produce a prepreg that cures in an acceptable time and at an acceptable temperature. However invariably this compromises the outlife of the prepreg. Thus in conventional prepregs there is a trade-off between reactivity and outlife.

The cure cycles employed for curing prepregs and stacks of prepregs are a balance of temperature and time taking into account the reactivity of the resin and the amount of resin and fibre employed. From an economic point of view it is desirable that the cycle time be as short as possible and so curing agents and accelerators are usually included in the epoxy resin. As well as requiring heat to initiate curing of the resin the curing reaction itself can be highly exothermic and this needs to be taken into account in the time/temperature curing cycle in particular for the curing of large and thick stacks of prepregs as is increasingly the case with the production of laminates for industrial application where large amounts of epoxy resin are employed and high temperatures can be generated within the stack due to the exotherm of the resin curing reaction. Excessive temperatures are to be avoided as they can damage the mould reinforcement or cause some decomposition of the resin. Excessive temperatures can also cause loss of control over the cure of the resin leading to run away cure.

Generation of excessive temperatures can be a greater problem when thick sections comprising many layers of prepreg are to be cured as is becoming more prevalent in the production of fibre reinforced laminates for heavy industrial use such as in the production of wind turbine structures particularly wind turbine spars and shells from which the blades are assembled. In order to compensate for the heat generated during curing it has been necessary to employ a dwell time during the curing cycle in which the moulding is held at a constant temperature for a period of time to control the temperature of the moulding and is cooled to prevent overheating this increases cycle time to undesirably long cycle times of several hours in some instances more than eight hours.

For example a thick stack of epoxy based prepregs such as 60 or more layers can require cure temperatures above 100°C for several hours. However, the cure can have a reaction enthalpy of 150 joules per gram of epoxy resin or more and this reaction enthalpy brings the need for a dwell time during the cure cycle at below 100°C to avoid overheating and decomposition of the resin. Furthermore, following the dwell time it is necessary to heat the stack further to above 100°C (for example to above 125°C) to complete the cure of the resin. This leads to undesirably long and uneconomic cure cycles. In addition, the high temperatures generated can cause damage to the mould or bag materials or require the use of special and costly materials for the moulds or bags.

In addition to these problems there is a desire to produce laminar structures from prepregs in which the cured resin has a high glass transition temperatures (Tg) such as above 80°C to extend the usefulness of the structures by improving their resistance to exposure at high temperatures and/or high humidity for extended periods of time which can cause an undesirable lowering of the Tg. For wind energy structures a Tg above 90°C is preferred. Increase in the Tg may be achieved by using a more reactive resin. However the higher the reactivity of the resin the greater the heat released during curing of the resin in the presence of hardeners and accelerators which increases the attendant problems as previously described.

WO01/00405 discloses a method of forming a void-free laminate, comprising the steps of enclosing a partially impregnated prepreg in a vacuum envelope, said partially impregnated prepreg comprising a fiber layer partially impregnated with a resin composition; and heating said partially impregnated prepreg under vacuum to withdraw air present in said partially impregnated prepreg and to cause said resin composition to fully infuse into said fiber layer and to cure thereby forming said void-free laminate. There are also disclosed various combinations of modified epoxy resins that may be employed with the methods disclosed. JPS53125475 discloses a prepreg capable of curing rapidly at relatively low temperatures, manufactured by impregnating a prepreg base material with a composition comprising an epoxy resin, an imidazole compound and an aromatic urea compound.

The present invention aims to overcome the aforesaid problems and/or to provide improvements generally.

According to the invention, there is provided a prepreg, a stack, a laminate, a use, a process, a resin matrix and a wind turbine blade or component as defined in any one of the accompanying claims.

The reactivity of an epoxy resin is indicated by its epoxy equivalent weight (EEW) the lower the EEW the higher the reactivity. The epoxy equivalent weight can be calculated as follows: (Molecular weight epoxy resin)/(Number of epoxy groups per molecule). Another way is to calculate with epoxy number that can be defined as follows: Epoxy number = 100/epoxy eq.weight. To calculate epoxy groups per molecule: (Epoxy number × mol.weight)/100. To calculate mol.weight: (100 × epoxy groups per molecule)/epoxy number. To calculate mol.weight: epoxy eq.weight × epoxy groups per molecule. The present invention is particularly concerned with providing a prepreg that can be based on a reactive epoxy resin that can be cured at a lower temperature with an acceptable moulding cycle time.

The present invention therefore provides a prepreg comprising a mixture of a fibrous reinforcement and a resin containing from 20% to 85% by weight of an epoxy resin of epoxy equivalent weight (EEW) from 150 to 1500 said resin being curable by an externally applied temperature in the range of 40°C to 110°C, preferably from 70°C to 110°C, more preferably from 60°C to 90°C and/or a combination of the aforesaid temperatures, wherein the resin contains from 0.5 to 5 wt % of a curing agent, the curing agent comprising a urea curing agent and an imidazole curing agent and being free of dicyandiamide, and at least one of the urea curing agent and/or the imidazole curing agent being isolated from the remainder of the resin.

We have found that the prepreg of the present invention and its epoxy resin matrix has a reduced cure time, whilst providing good mechanical performance, a desirable T_{g} (glass transition temperature) and good mechanical performance in combination with the fibrous reinforcement of the prepreg.

The outlife of the prepreg of the present invention is extended by any one or more of the following percentages alone or in combination: 30%, 50%, 70%, 90%, 120%, 150%, 200%, 230%, 270% in comparison to a prepreg comprising a resin in which the curing agent component is not isolated but is included in the remainder of the resin.

Upon processing and curing of the prepreg, the viscosity of the resin and/or curing agent component is reduced allowing flow of the resin and/or respective curing agent component. In turn, the curing agent component and resin contact one another which accelerates curing of the epoxy resin.

The invention further provides a stack of prepregs containing an epoxy resin of epoxy equivalent weight (EEW) from 150 to 1500 the resin being curable by an externally applied temperature in the range of 40 °C to 110°C, preferably from 70 °C to 110°C, more preferably from 60 °C to 90°C and/or a combination of the aforesaid temperatures, the stack containing at least 2 or more prepreg layers, typically 40, 60 or more layers, wherein the resin contains from 0.5 to 5 wt % of a curing agent, the curing agent comprising a urea curing agent and an imidazole curing agent and being free of dicyandiamide, and at least one of the urea curing agent and/or the imidazole curing agent being isolated from the remainder of the resin.

The invention further provides such a prepreg and stacks of prepregs that can be cured in less than ten hours particularly less than eight hours. In a preferred embodiment the curing resin has a dynamic enthalpy of 150 joules per gram of epoxy resin or lower.

We have found that such desirable prepregs and stacks of prepregs may be obtained using conventionally available epoxy resins if the epoxy resin is cured in the absence of a traditional hardener such as dicyandiamide and in particular we have found that these desirable prepregs can be obtained by use of a urea based curing agent in combination with an imidazole based curing agent in the absence of a hardener such as dicyandiamide.

The prepregs of this invention are typically used at a different location from where they are manufactured and they therefore require handleability. It is therefore preferred that they are dry or as dry as possible and have low surface tack. It is therefore preferred to use high viscosity resins. This also has the benefit that the impregnation of the fibrous layer is slow allowing air to escape and to minimise void formation.

In order to produce final laminates with substantially uniform mechanical properties it is important that the structural fibres and the epoxy resin be mixed to provide a substantially homogenous prepreg. This requires uniform distribution of the structural fibres within the prepreg to provide a substantially continuous matrix of the resin surrounding the fibres. It is therefore important to minimise the encapsulation of air bubbles within the resin during application to the fibres. It is therefore preferred to use high viscosity resins. The prepregs should contain a low level of voids in order and it is therefore preferred that each prepreg and the prepreg stack has a water pick-up value of less than 25%, more preferably less than 15%, more preferably less than 9%, most preferably less than 3%. The water pick-up test determines the degree of waterproofing or impregnation of prepregs. For this purpose, a specimen of prepreg material is initially weighed and clamped between two plates in such a way that a strip of specimen 5 mm wide protrudes. This arrangement is suspended in the direction of the fibres in a water bath for 5 minutes at room temperature (21 °C). After removing the plates, the specimen is again weighed. The difference in weight is used as a measured value for the degree of impregnation. The smaller the amount of water picked up, the higher the degree of waterproofing or impregnation.

The prepregs of this invention are intended to be laid-up with other composite materials (e.g. other prepregs according to the invention or other prepregs) to produce a prepreg stack which can be cured to produce a fibre reinforced laminate.

The prepreg is typically produced as a roll of prepreg and in view of the tacky nature of such materials, a backing sheet is generally provided to enable the roll to be unfurled at the point of use. Thus, preferably the prepreg according to the invention comprises a backing sheet on an external face.

The epoxy resin has a high reactivity as indicated by an EEW in the range from 150 to 1500 preferably a high reactivity such as an EEW in the range of from 200 to 500 and the resin composition comprises the resin and an accelerator or curing agent. Suitable epoxy resins may comprise blends of two or more epoxy resins selected from monofunctional, difunctional, trifunctional and/or tetrafunctional epoxy resins.

Suitable difunctional epoxy resins, by way of example, include those based on: diglycidyl ether of bisphenol F, diglycidyl ether of bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Difunctional epoxy resins may be selected from diglycidyl ether of bisphenol F, diglycidyl ether of bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the tradenames MY0500 and MY0510 (triglycidyl para-aminophenol) and MY0600 and MY0610 (triglycidyl meta-aminophenol). Triglycidyl meta-aminophenol is also available from Sumitomo Chemical Co. (Osaka, Japan) under the tradename ELM-120.

Suitable tetrafunctional epoxy resins include N,N, N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Dow Chemicals, Midland, MI) DEN439 (from Dow Chemicals), Araldite ECN 1273 (from Huntsman Advanced Materials), and Araldite ECN 1299 (from Huntsman Advanced Materials).

The urea curing agent may comprise a bis urea curing agent, such as 2,4 toluene bis dimethyl urea or 2,6 toluene bis dimethyl urea and/or combinations of the aforesaid curing agents. Urea based curing agents may also be referred to as "urones".

Other suitable urea based curing agents may comprise: 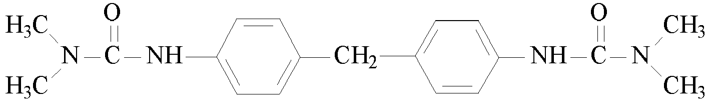 4,4-methylene diphenylene bis(N,N-dimethyl urea) 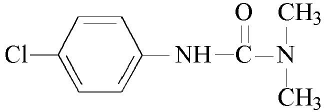 1,1-dimethyl, 3-(4-chlorophenyl)urea 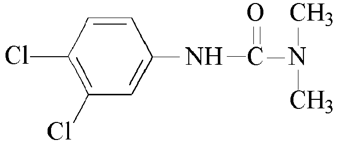 1,1-dimethyl, 3-(3,4-dichlorophenyl)urea 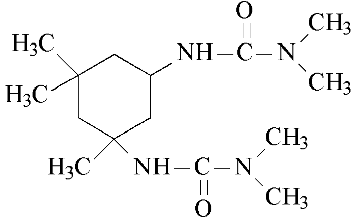 Isophorone bisdimethyl urea 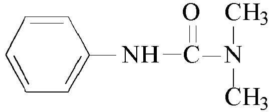 1,1-dimethyl, 3-phenyl urea 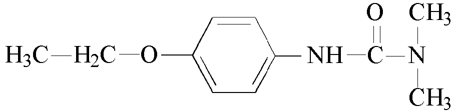 1,1-dimethyl, 3-(4-ethoxyphenyl)urea 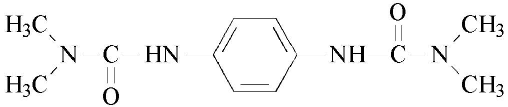 1,1-(4-phenylene)-bis(3,3-dimethyl)urea 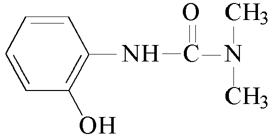 1,1-dimethyl, 3-(2-hydroxyphenyl)urea 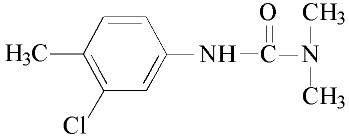 1,1-dimethyl,3-(3-chloro-4-methylphenyl)urea 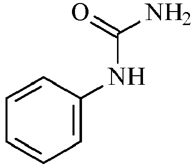 N-Phenylurea 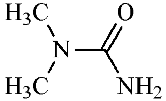 N,N-Dimethylurea 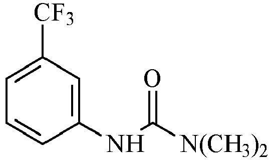 Fluomethuron

Preferred urea based materials are the range of materials available under the commercial name DYHARD® the trademark of Alzchem, urea derivatives, which include bis ureas such as UR500 and UR505.

The imidazole curing agent may comprise an imidazole adduct. The imidazole curing agent may also comprise a bisphenol-epoxy-imidazole adduct.

In a preferred embodiment, the imidazole curing agent comprises a bisphenol-epoxy-imidazole adduct comprising up to 35 mol% of an imidazole. The imidazole curing agent may comprise bisphenol epoxy 2-methyl imidazole, 1-[(2-methyl-1himidazol-1-methyl)methyl]2-naphthalenol and/or combinations thereof. In an alternative preferred embodiment, the imidazole curing agent comprises 2-Ethyl-4-methylimidazole.

Suitable imidazole curing agent may be selected from one or more of the following components: 2-methylimidazole, 2-undecylimidazole, 2-heptadecylimidazole, 1,2-dimethylimidazole, 2-ethyl-4-methylimidazole, 2-phenylimidazole, 2-phenylimidazole, 2-phenyl-4-methylimidazole, 1-benzyl-2-methylimidazole, 1-benzyl-2-phenylimidazole, 1-cyanoethyl-2-methylimidazole, 1-cyanoethyl-2-undecylimidazole, 1-cyanoethyl-2-ethyl-4-methylimidazole, 1-cyanoethyl-2-phenylimidazole, 1-cyanoethyl-2-undecylimidazolium-trimellitate, 1-cyanoethyl-2-phenylimidazolium-trimellitate, 2,4-diamino-6-[2'-methylimidazolyl-(1')]-ethyl-s-triazine, 2,4-diamino-6-[2'-methylimidazolyl-(1')]-ethyl-s-triazine, 2,4-diamino-6-[2'-undecylimidazolyl-(1')]-ethyl-s-triazine powder, 2,4-diamino-6-[2'-ethyl-4'-methylimidazolyl-(1')]-ethyl-s-triazine, 2,4-diamino-6-[2'-methylimidazolyl-(1')]-ethyl-s-triazineisocyanuric acid adduct dehydrate, 2,4-diamino-6-[2'-methylimidazolyl-(1')]-ethyl-s-triazineisocyanuric acid adduct dehydrate, 2-phenylimidazoleisocyanuric acid adduct, 2-phenyl-4,5-dihydroxymethylimidazole, 2-phenyl-4-methyl-5-hydroxymethylimidazole, 2,3-dihydro-1H-pyrrolo[1,2-a], 1-dodecyl-2-methyl-3-benzylimidazolium chloride, 2-phenylimidazoline, 2,4-diamino-6-vinyl-1,3,5-triazine, 2,4-diamino-6-vinyl-1,3,5-triazineisocyanuric acid adduct, or 2,4-diamino-6-methacryloyloxyethyl-1,3,5-triazine.

The curing agent may comprise a latent curing agent which may comprise an epoxy resin imidazole adduct.

In another embodiment, the urea based curing agent is present in the resin in the range of from 0.5 to 4 wt%, preferably from 1 to 2.8 wt%, more preferably from 1.3 to 2.7 wt%, more preferably from 2 to 2.6 wt%, more preferably from 2.1 to 2.5 wt%, and more preferably from 1.8 to 2.5 wt% and/or combinations of the aforesaid ranges.

In a further embodiment, the imidazole based curing agent is present in the resin in the range of from 0.1 to 1.8 wt%, more preferably from 0.2 to 1.5 wt%, more preferably from 0.4 to 1.1 wt%, more preferably from 0.5 to 0.8 wt%, and more preferably from 0.6 to 0.9 wt% and/or combinations of the aforesaid ranges.

The structural fibres employed in the prepregs or prepreg stacks of this invention may be tows or fabrics and may be in the form of random, knitted, non-woven, multi-axial or any other suitable pattern. For structural applications, it is generally preferred that the fibres be unidirectional in orientation. When unidirectional fibre layers are used, the orientation of the fibre can vary throughout the prepreg stack. However, this is only one of many possible orientations for stacks of unidirectional fibre layers. For example, unidirectional fibres in neighbouring layers may be arranged orthogonal to each other in a so-called 0/90 arrangement, which signifies the angles between neighbouring fibre layers. Other arrangements, such as 0/+45/-45/90 are of course possible, among many other arrangements.

The structural fibres may comprise cracked (i.e. stretch-broken), selectively discontinuous or continuous fibres. The structural fibres may be made from a wide variety of materials, such as carbon, graphite, glass, metalized polymers, aramid and mixtures thereof. Glass and carbon fibres are preferred carbon fibre, being preferred for wind turbine shells of length above 40 metres such as from 50 to 60 metres. The structural fibres, may be individual tows made up of a multiplicity of individual fibres and they may be woven or non-woven fabrics. The fibres may be unidirectional, bidirectional or multidirectional according to the properties required in the final laminate. Typically the fibres will have a circular or almost circular cross-section with a diameter in the range of from 3 to 20 µm, preferably from 5 to 12 µm. Different fibres may be used in different prepregs used to produce a cured laminate.

Exemplary layers of unidirectional structural fibres are made from HexTow® carbon fibres, which are available from Hexcel Corporation. Suitable HexTow® carbon fibres for use in making unidirectional fibre layers include: IM7 carbon fibres, which are available as fibres that contain 6,000 or 12,000 filaments and weight 0.223 g/m and 0.446 g/m respectively; IM8-IM10 carbon fibres, which are available as fibres that contain 12,000 filaments and weigh from 0.446 g/m to 0.324 g/m; and AS7 carbon fibres, which are available in fibres that contain 12,000 filaments and weigh 0.800 g/m.

The structural fibres of the prepregs will be substantially impregnated with the epoxy resin and prepregs with a resin content of from 20 to 85 wt % of the total prepreg weight are preferred. The prepregs of the present invention are predominantly composed of resin and structural fibres.

The stacks of prepregs of this invention may contain more than 40 layers, typically more than 60 layers and at times more than 80 layers. Typically the stack will have a thickness of from 35 to 100mm.

Epoxy resins can become brittle upon curing and toughening materials can be included with the resin to impart durability, although they may result in an undesirable increase in the viscosity of the resin. The toughening material may be supplied as a separate layer such as a veil.

Where the additional toughening material is a polymer it should be insoluble in the matrix epoxy resin at room temperature and at the elevated temperatures at which the resin is cured. Depending upon the melting point of the thermoplastic polymer, it may melt or soften to varying degrees during curing of the resin at elevated temperatures and re-solidify as the cured laminate is cooled. Suitable thermoplastics should not dissolve in the resin, and include thermoplastics, such as polyamides (PAS), polyethersulfone (PES) and polyetherimide (PEI). Polyamides such as nylon 6 (PA6), nylon 11 (PA11) or nylon 12 (PA12), and/or mixtures thereof are preferred.

The resin system is particularly suitable for prepreg applications at which a desired cure temperature is below 100°C. The resin system may be processed to cure over a wide processing temperature range, ranging from 75°C up to 120°C. Due to its low exothermic properties the resin system can be used for large industrial components, suitable for the cure of thin and thick sections. It demonstrates a good static and dynamic mechanical performance following cure temperatures <100°C.

As discussed, the resin system can be pre-impregnated into carbon, glass or aramid fiber reinforcement materials and exhibits a significant long out-life at room temperature (greater than 6 weeks at 23°C). Other benefits of the resin system include: excellent tack life, low exothermic properties, well adapted to low pressure processing, suitable for a range of processing pressures (0.3 to 5 bar) which enable both vacuum bag and autoclave cure applications, good flexibility and handleability of prepreg, suitable for thin and thick laminates, good quality surface finish, excellent fatigue performance and translucent resin after cure.

The prepregs of this invention are produced by impregnating the fibrous material with the epoxy resin. In order to increase the rate of impregnation, the process is preferably carried out at an elevated temperature so that the viscosity of the resin in reduced. However it must not be so hot for sufficient length of time that premature curing of the resin occurs. Thus, the impregnation process is preferably carried out at temperatures in the range of from 40°C to 80°C.

In the present invention, some or all of the curing agent is isolated from the epoxy resin. In an embodiment at least 5% by weight of the curing agent is isolated from the epoxy resin. In another embodiment, at least 10%, preferably at least 15%, more preferably at least 25%, or at least 40% or at least 50% or at least 60%, or at least 70% or at least 80% or at least 90% or 100% of the curing agent is isolated from the epoxy resin.

In a further embodiment, between 20% to 100%, preferably from 40 to 80% or from 50 to 70% and/or combinations thereof, by weight of the curing agent is isolated from the epoxy resin.

In a preferred embodiment the curing agent that is isolated is an imidazole curing agent and/or some or all of a urea curing agent. Isolation of the curative has the effect of prolonging the outlife of the prepreg because the physical separation of a curing agent prevents it from reacting with the resin.

The outlife of the prepreg may be extended by any one or more of the following percentages 30% to 50%, or 40% to 70%, or 20% to 90%, or 20% to 120%, or 20% to 150%, or 20% to 200%, or 20% to 230%, or 20% to 270%, either considered alone or in combination in comparison to a prepreg comprising a resin in which the curing agent component is included in the remainder of the resin.

Isolation can be achieved by separating the curing agent from the remainder of the reinforcement resin, or by encapsulating the curing agent to prevent direct contact of the curing components of the curing agents with the remainder of the resin matrix. In an embodiment the curing agent is impregnated into the tows of the fibrous reinforcement, whilst the remainder of the resin is applied to an outer face of the fibrous reinforcement. The separation of a curative and resin in this manner is disclosed in EP 1 709 119.

In an alternative embodiment the curing agent may be applied one side of a first face of a fibrous reinforcement layer, and the resin is applied to the second face of the same structural fibre layer. US 7,267,868, discloses the separation of a resin and a curing agent in this manner. Thus, some or all of the curing agent becomes separated by the fibrous reinforcement which acts as a barrier between the two reactive components. In this embodiment the tows of the fibrous reinforcement may remain partially unimpregnated with either the resin or the curing agents. This assists air removal by providing air venting pathways for air and volatiles to escape.

The viscosity of the resin is selected such that minimal flow occurs during storage so that the resin does not flow into the curative. As the prepreg is heated the viscosity of the resin decreases. This causes the resin to flow into the fibrous reinforcement, mixing it with the separated curing agent. By arranging the curing agent in or around the fibrous reinforcement, the fibres affect the flow of the resin, improving mixing with the curative.

In the present invention, where the curing agent comprises an imidazole and a urea curing agent, separation of the imidazole from the resin has the greatest effect on outlife. This is because the urea curing agents of the present invention are latent and only have a relatively significant effect on the cross-linking of the resin when temperatures of between 10°C and 60°C, preferably from 20°C to 90°C, or preferably from 20°C to 80°C, or preferably from 40°C to 60°C, are exceeded. At this point they melt and initiate cross linking of the resin. Separation of at least the imidazole curing agent from the resin is therefore preferred, but the greater the proportion of both the imidazole and urea curing agent that is separated from the resin the longer the outlife will be.

In a particularly preferred embodiment the curing agent, which is preferably an imidazole curative and optionally some or all or a urone curing agent, is separated from the resin by impregnating the curing agent into a layer of fibrous reinforcement to avoid contact with the resin, whereby the resin is fully or partially impregnated into a separate second layer of fibrous reinforcement. The two impregnated fibrous reinforcement layers can be stored separately and combined by the user during lay-up. Lay-ups are then formed by arranging alternating layers of resin impregnated fibrous reinforcement and curing agent impregnated layers of fibrous reinforcement in a mould. This brings the curing agent impregnated fibrous layer into close contact with the resin impregnated fibrous layer. It is necessary to impregnate the fibrous reinforcement with sufficient resin to mix with the curing agent and to completely wet out both of the fibrous reinforcement layers. By storing the curing agent on a fibrous reinforcement separate from the resin, substantial increases in outlife can be achieved.

A curing agent may be impregnated into a fibrous reinforcement by first dissolving or suspending the curing agent in a carrier, and then applying the resulting mixture to the fibrous reinforcement. Exemplary carriers include but are not limited to ketones such, as acetone or methylethylketone, polyethyleneglycols, polypropyleneglycols, water or other appropriate solvents. The amount of curing agent added to the carrier will vary depending on the carrier and curing agent used, and the amount of impregnation desired. To deposit the curing agent within the fibrous tows the carrier must be sufficiently liquid to penetrate the tows. In such a situation the fibrous material can be passed through a bath containing the curing agent and carrier. Alternatively the carrier can be sufficiently viscous that it can be formed into a film, in which case the film can be impregnated onto or into the fibrous reinforcement using any known resin impregnation method. The carrier can be selected so that it remains present and does not interfere with the cured performance, or alternatively, if it is sufficiently volatile it may be removed by evaporation. The curing agent and carrier mixture may also be applied to the surface of the fibrous reinforcement using spray methods, gravure printing or other printing methods which are known in the art. Curing agents can be applied in powdered form without the need for a carrier, by using any powder deposition process that is currently known in the art.

The resin composition can be spread onto the external surface of a roller and coated onto a paper or other backing material to produce a layer of curable resin. The resin composition can then be brought into contact with the fibrous layer for impregnation perhaps by the passage through rollers. The resin may be present on one or two sheets of backing material, which are brought into contact with the structural fibrous layer and by passing them through heated consolidation rollers to cause impregnation. Alternatively the resin can be maintained in liquid form in a resin bath either being a resin that is liquid at ambient temperature or being molten if it is a resin that is solid or semi-solid at ambient temperature. The liquid resin can then be applied to a backing employing a doctor blade to produce a resin film on a release layer such as paper or polyethylene film. The structural fibrous layer may then be placed into the resin and optionally a second resin layer may be provided on top of the fibrous layer.

A backing sheet can be applied either before or after impregnation of the resin. However, it is typically applied before or during impregnation as it can provide a non-stick surface upon which to apply the pressure required for causing the resin to impregnate the fibrous layer.

Once prepared the prepreg may be rolled-up, so that it can be stored for a period of time. It can then be unrolled and cut as desired and optionally laid up with other prepregs to form a prepreg stack in a mould or in a vacuum bag which is subsequently placed in a mould.

Once it is created in the mould the prepreg or prepreg stack may be cured by exposure to an externally applied elevated temperature in the range 70°C to 110°C, and optionally elevated pressure, to produce a cured laminate.

The exotherm due to the curing of the prepreg stack may take the temperatures within the stack to above 110°C, however we have found that if the externally applied temperature is within the range of 70°C to 110°C, curing of a prepreg or stack of prepregs based on an epoxy resin of EEW from 150 to 1500 particularly of EEW from 200 to 500 and in the absence of a curing hardener can be accomplished within no more than 4 to 8 hours with an externally applied temperature of 80°C without substantial decomposition of the resin. We have also found that this enables structures in which the resin has a Tg above 80°C, typically in the range 80°C to 110°C more typically 80°C to 100°C to be obtained within an acceptable curing time.

Thus, in further aspect, the invention relates to a process of curing the epoxy resin within a prepreg or prepreg stack as described herein, the process involving exposing the prepreg or prepreg stack to an externally applied temperature in the range 40 °C to 110°C, preferably from 70 °C to 110°C, more preferably from 60 °C to 90°C and/or a combination of the aforesaid temperatures for up to 8 hours at a pressure of less than 3.0 bar absolute, said resin containing from 0.5 to 10 wt % of a curing agent and being free of a latent hardener.

The process may be performed in a vacuum bag which may be placed in a mould or directly in a mould and is preferably carried out at a pressure of less than 3.0 bar absolute.

The curing process may be carried out at a pressure of less than 2.0 bar absolute. In a particularly preferred embodiment the pressure is less than atmospheric pressure. The curing process may be carried out employing one or more externally applied temperatures in the range of from 70°C to 110°C, for a time sufficient to cure the epoxy resin composition to the desired degree. In particular it is preferred that the curing cycle has a duration of less than three hours.

Curing at a pressure close to atmospheric pressure can be achieved by the so-called vacuum bag technique. This involves placing the prepreg or prepreg stack in an air-tight bag and creating a vacuum on the inside of the bag, the bag may be placed in a mould prior or after creating the vacuum and the resin then cured by externally applied heat to produce the moulded laminate. The use of the vacuum bag has the effect that the prepreg stack experiences a consolidation pressure of up to atmospheric pressure, depending on the degree of vacuum applied.

Upon curing, the prepreg or prepreg stack becomes a composite laminate, suitable for use in a structural application, such as for example an automotive, marine vehicle or an aerospace structure or a wind turbine structure such as a shell for a blade or a spar. Such composite laminates can comprise structural fibres at a level of from 80% to 15% by volume, preferably from 58% to 65% by volume.

The present invention also provides a process for the production of wind turbine structures comprising providing a prepreg of stack of prepregs within a vacuum bag, the prepregs comprising a mixture of fibrous reinforcement and from 20 % to 85 wt % of an epoxy resin of epoxy equivalent weight (EEW) 150 to 1500 and containing from 0.5 to 10 wt % of a curing agent, the curing agent comprising a urea curing agent and an imidazole curing agent, and being free of dicyandiamide, and at least one of the urea curing agent and/or the imidazole curing agent being isolated from the remainder of the resin, placing the vacuum bag within a mould and creating a vacuum within the bag prior to or after placement in the mould and curing the epoxy resin by application of an externally applied temperature in the range of 40 °C to 110°C, preferably from 70 °C to 110°C, more preferably from 60 °C to 90°C and/or a combination of the aforesaid temperatures for a period of from 4 to 8 hours.

The present invention further provides a resin matrix comprising an epoxy resin containing from 20% to 85% by weight of an epoxy resin of epoxy equivalent weight (EEW) from 150 to 1500 said resin being curable by an externally applied temperature in the range of 40 °C to 110°C, preferably from 70 °C to 110°C, more preferably from 60 °C to 90°C and/or a combination of the aforesaid temperatures, the resin containing from 0.5 to 5 wt % of a urea curing agent, preferably a bis urea curing agent, and an imidazole, the curing agent being free of dicyandiamide and at least one of the urea curing agent and/or the imidazole curing agent being isolated from the remainder of the resin matrix.

The invention has applicability in the production of a wide variety of materials. One particular use is in the production of wind turbine blades. The present invention therefore provides a wind turbine blade or component produces from a resin matrix according to the present invention in combination with a fibrous reinforcement.

Typical wind turbine blades comprise two long shells which come together to form the outer surface of the blade and a supporting spar within the blade and which extends at least partially along the length of the blade. The shells and the spar may be produced by curing the prepregs or stacks of prepregs of the present invention.

The length and shape of the shells vary but the trend is to use longer blades (requiring longer shells) which in turn can require thicker shells and a special sequence of prepregs within the stack to be cured. This imposes special requirements on the materials from which they are prepared. Carbon fibre based prepregs are preferred for blades of length 30 metres or more particularly those of length 40 metres or more such as 45 to 65 metres. The length and shape of the shells may also lead to the use of different prepregs within the stack from which the shells are produced and may also lead to the use of different prepregs along the length of the shell. In view of their size and complexity the preferred process for the manufacture of wind energy components such as shells and spars is to provide the appropriate prepregs within a vacuum bag, which is placed in a mould and heated to the curing temperature. The bag may be evacuated before or after it is placed within the mould.

It will be appreciated that the size, shape and complexity of these wind turbine structures requiring large volumes of prepregs can produce considerable heat due to the exotherm generated by curing. The opportunities to reduce this exotherm presented by the present invention are therefore particularly valuable in the production of such wind turbine structures.

Furthermore, in order to withstand the conditions to which wind turbine structures are subjected during use it is desirable that the cured prepregs from which the shells and spars are made have a high Tg and preferably a Tg greater than 90°C. In addition the present invention allows this to be accomplished employing reactive epoxy resin such as those with an epoxy equivalent weight of 200 to 500 without requiring unduly long cure times.

## Claims

1. A prepreg comprising a mixture of a fibrous reinforcement and a resin containing from 20% to 85% by weight of an epoxy resin of epoxy equivalent weight (EEW) from 150 to 1500 said resin being curable by an externally applied temperature in the range of 40 °C to 110°C, preferably from 70 °C to 110°C, more preferably from 60 °C to 90°C and/or a combination of the aforesaid temperatures, wherein the resin contains from 0.5 to 5 wt % of a curing agent, the curing agent comprising a urea curing agent and an imidazole curing agent and being free of dicyandiamide, and at least one of the urea curing agent and/or the imidazole curing agent being isolated from the remainder of the resin.

2. A stack of prepregs containing an epoxy resin of epoxy equivalent weight (EEW) from 150 to 1500 the resin being curable by an externally applied temperature in the range of 40 °C to 110°C, preferably from 70 °C to 110°C, more preferably from 60 °C to 90°C and/or a combination of the aforesaid temperatures, the stack containing at least 2 or more prepreg layers, typically 40, 60 or more layers, wherein the resin contains from 0.5 to 5 wt % of a curing agent, the curing agent comprising a urea curing agent and an imidazole curing agent and being free of dicyandiamide, and at least one of the urea curing agent and/or the imidazole curing agent being isolated from the remainder of the resin.

3. A prepreg or stack of prepregs according to claim 1 or claim 2 that can be cured in less than eight hours particularly less than 7 or six or five or 4 or 3 or two hours.

4. A stack of prepregs according to any of Claims 2 to 3 having a thickness of from 2mm to 100mm.

5. A prepreg or stack of prepregs according to any of the preceding claims comprising from 20 to 85 wt % of epoxy resin and from 80 to 15 wt % of fibres.

6. A laminate comprising a cured prepreg or stack of prepregs according to any of the preceding claims.

7. The use of a prepreg or a stack of prepregs according to any of Claims 1 to 5 for the production of wind turbine structures.

8. A process of curing the epoxy resin within a prepreg or prepreg stack according to any one of claims 1 to 5, the process involving exposing the prepreg or prepreg stack to an externally applied temperature in the range 40 °C to 110°C, preferably from 70 °C to 110°C, more preferably from 60 °C to 90°C and/or a combination of the aforesaid temperatures for up to 8 hours at a pressure of less than 3.0 bar absolute, said resin containing from 0.5 to 10 wt % of a curing agent and being free of a latent hardener.

9. A process according to Claim 8 in which the epoxy resin has an EEW of from 200 to 500.

10. A process for the production of wind turbine structures comprising providing a prepreg of stack of prepregs within a vacuum bag, the prepregs comprising a mixture of fibrous reinforcement and from 20 % to 85 wt % of an epoxy resin of epoxy equivalent weight (EEW) 150 to 1500 and containing from 0.5 to 10 wt % of a curing agent, the curing agent comprising a urea curing agent and an imidazole curing agent, and being free of dicyandiamide, and at least one of the urea curing agent and/or the imidazole curing agent being isolated from the remainder of the resin, placing the vacuum bag within a mould and creating a vacuum within the bag prior to or after placement in the mould and curing the epoxy resin by application of an externally applied temperature in the range of 40 °C to 110°C, preferably from 70 °C to 110°C, more preferably from 60 °C to 90°C and/or a combination of the aforesaid temperatures for a period of from 4 to 8 hours.

11. A resin matrix comprising an epoxy resin containing from 20% to 85% by weight of an epoxy resin of epoxy equivalent weight (EEW) from 150 to 1500 said resin being curable by an externally applied temperature in the range of 40 °C to 110°C, preferably from 70 °C to 110°C, more preferably from 60 °C to 90°C and/or a combination of the aforesaid temperatures, the resin containing from 0.5 to 5 wt % of a urea curing agent, preferably a bis urea curing agent, and an imidazole, the curing agent being free of dicyandiamide and at least one of the urea curing agent and/or the imidazole curing agent being isolated from the remainder of the resin matrix.

12. A wind turbine blade or component produced from a resin matrix as defined in claim 11 in combination with a fibrous reinforcement.

## Patentansprüche

1. Prepreg, das eine Mischung aus einer Faserverstärkung und einem Harz umfasst, das von 20 Gew.-% bis 85 Gew.-% eines Epoxidharzes mit einem Epoxid-Äquivalentgewicht (epoxy equivalent weight - EEW) von 150 bis 1500 enthält, wobei das Harz durch eine von außen aufgebrachte Temperatur im Bereich von 40 °C bis 110 °C, vorzugsweise von 70 °C bis 110 °C, stärker bevorzugt von 60 °C bis 90 °C und/oder einer Kombination der vorgenannten Temperaturen aushärtbar ist, wobei das Harz von 0,5 bis 5 Gew.-% eines Härtungsmittels enthält, wobei das Härtungsmittel ein Harnstoff-Härtungsmittel und ein Imidazol-Härtungsmittel umfasst und frei von Dicyandiamid ist, und mindestens eines des Harnstoff-Härtungsmittels und/oder des Imidazol-Härtungsmittels von dem Rest des Harzes isoliert ist.

2. Stapel von Prepregs, die ein Epoxidharz mit einem Epoxid-Äquivalentgewicht (EEW) von 150 bis 1500 enthalten, wobei das Harz durch eine von außen aufgebrachte Temperatur im Bereich von 40 °C bis 110 °C, vorzugsweise von 70 °C bis 110 °C, stärker bevorzugt von 60 °C bis 90 °C und/oder einer Kombination der vorgenannten Temperaturen aushärtbar ist, wobei der Stapel mindestens 2 oder mehr Prepreg-Schichten, typischerweise 40, 60 oder mehr Schichten enthält, wobei das Harz von 0,5 bis 5 Gew.-% eines Härtungsmittels enthält, wobei das Härtungsmittel ein Harnstoff-Härtungsmittel und ein Imidazol-Härtungsmittel umfasst und frei von Dicyandiamid ist, und mindestens eines des Harnstoff-Härtungsmittels und/oder des Imidazol-Härtungsmittels von dem Rest des Harzes isoliert ist.

3. Prepreg oder Stapel von Prepregs nach Anspruch 1 oder Anspruch 2, die in weniger als acht Stunden, insbesondere in weniger als 7 oder sechs oder fünf oder 4 oder 3 oder zwei Stunden ausgehärtet werden können.

4. Stapel von Prepregs nach einem der Ansprüche 2 bis 3, die eine Dicke von 2 mm bis 100 mm aufweisen.

5. Prepreg oder Stapel von Prepregs nach einem der vorhergehenden Ansprüche, die von 20 bis 85 Gew.-% Epoxidharz und von 80 bis 15 Gew.-% Fasern umfassen.

6. Laminat, das ein ausgehärtetes Prepreg oder einen Stapel von Prepregs nach einem der vorhergehenden Ansprüche umfasst.

7. Verwendung eines Prepregs oder eines Stapels von Prepregs nach einem der Ansprüche 1 bis 5 zur Herstellung von Windturbinenstrukturen.

8. Vorgang zum Aushärten des Epoxidharzes in einem Prepreg oder Prepreg-Stapel nach einem der Ansprüche 1 bis 5, wobei der Vorgang das Aussetzen des Prepregs oder Prepreg-Stapels einer von außen aufgebrachten Temperatur im Bereich von 40 °C bis 110 °C, vorzugsweise von 70 °C bis 110 °C, stärker bevorzugt von 60 °C bis 90 °C und/oder einer Kombination der vorgenannten Temperaturen für bis zu 8 Stunden bei einem Druck von weniger als 3,0 bar absolut beinhaltet, wobei das Harz von 0,5 bis 10 Gew.-% eines Härtungsmittels enthält und frei von einem latenten Härter ist.

9. Vorgang nach Anspruch 8, wobei das Epoxidharz ein EEW von 200 bis 500 aufweist.

10. Vorgang zur Herstellung von Windturbinenstrukturen, der das Bereitstellen eines Prepregs eines Stapels von Prepregs in einem Vakuumbeutel, wobei die Prepregs eine Mischung aus Faserverstärkung und von 20 Gew.-% bis 85 Gew.-% eines Epoxidharzes mit einem Epoxid-Äquivalentgewicht (EEW) 150 bis 1500 umfassen und von 0,5 bis 10 Gew.-% eines Härtungsmittels enthalten, wobei das Härtungsmittel ein Harnstoff-Härtungsmittel und ein Imidazol-Härtungsmittel umfasst und frei von Dicyandiamid ist, und mindestens eines des Harnstoff-Härtungsmittels und/oder des Imidazol-Härtungsmittels vom Rest des Harzes isoliert ist, das Platzieren des Vakuumbeutels in einer Form und das Erzeugen eines Vakuums innerhalb des Beutels vor oder nach dem Platzieren in der Form und das Aushärten des Epoxidharzes durch Aufbringen einer von außen aufgebrachten Temperatur im Bereich von 40 °C bis 110 °C, vorzugsweise von 70 °C bis 110 °C, stärker bevorzugt von 60 °C bis 90 °C und/oder einer Kombination der vorgenannten Temperaturen für einen Zeitraum von 4 bis 8 Stunden umfasst.

11. Harzmatrix, die ein Epoxidharz umfasst, das von 20 Gew.-% bis 85 Gew.-% eines Epoxidharzes mit einem Epoxid-Äquivalentgewicht (EEW) von 150 bis 1500 enthält, wobei das Harz durch eine von außen aufgebrachte Temperatur im Bereich von 40 °C bis 110 °C, vorzugsweise von 70 °C bis 110 °C, stärker bevorzugt von 60 °C bis 90 °C und/oder einer Kombination der vorgenannten Temperaturen aushärtbar ist, wobei das Harz von 0,5 bis 5 Gew.-% eines Harnstoff-Härtungsmittels, vorzugsweise eines Bis-Harnstoff-Härtungsmittels, und ein Imidazol enthält, wobei das Härtungsmittel frei von Dicyandiamid ist, und mindestens eines des Harnstoff-Härtungsmittels und/oder des Imidazol-Härtungsmittels von dem Rest der Harzmatrix isoliert ist.

12. Windturbinenschaufel oder -komponente, die aus einer Harzmatrix nach Anspruch 11 in Kombination mit einer Faserverstärkung hergestellt ist.

## Revendications

1. Préimprégné comprenant un mélange d'un renfort fibreux et d'une résine contenant de 20 % à 85 % en poids d'une résine époxy d'un poids équivalent époxy (EEW) de 150 à 1 500, ladite résine étant durcissable par une température appliquée de manière externe dans la plage de 40 °C à 110 °C, préférablement de 70 °C à 110 °C, plus préférablement de 60 °C à 90 °C et/ou une combinaison des températures susmentionnées, dans lequel la résine contient de 0,5 à 5 % en poids d'un agent durcisseur, l'agent durcisseur comprenant un agent durcisseur d'urée et un agent durcisseur d'imidazole et étant exempt de dicyandiamide, et au moins l'un de l'agent durcisseur d'urée et/ou de l'agent durcisseur d'imidazole étant isolé du reste de la résine.

2. Empilement de préimprégnés contenant une résine époxy d'un poids équivalent époxy (EEW) de 150 à 1 500, la résine étant durcissable par une température appliquée de manière externe dans la plage de 40 °C à 110 °C, préférablement de 70 °C à 110 °C, plus préférablement de 60 °C à 90 °C et/ou une combinaison des températures susmentionnées, l'empilement contenant au moins 2 couches de préimprégné ou plus, typiquement 40, 60 couches ou plus, dans lequel la résine contient de 0,5 à 5 % en poids d'un agent durcisseur, l'agent durcisseur comprenant un agent durcisseur d'urée et un agent durcisseur d'imidazole et étant exempt de dicyandiamide, et au moins l'un de l'agent durcisseur d'urée et/ou l'agent durcisseur d'imidazole étant isolé du reste de la résine.

3. Préimprégné ou empilement de préimprégnés selon la revendication 1 ou la revendication 2 qui peut être durci en moins de huit heures, en particulier en moins de 7 ou six ou cinq ou 4 ou 3 ou deux heures.

4. Empilement de préimprégnés selon l'une quelconque des revendications 2 à 3 ayant une épaisseur de 2 mm à 100 mm.

5. Préimprégné ou empilement de préimprégnés selon l'une quelconque des revendications précédentes comprenant de 20 à 85 % en poids de résine époxy et de 80 à 15 % en poids de fibres.

6. Stratifié comprenant un préimprégné ou un empilement de préimprégnés durci selon l'une quelconque des revendications précédentes.

7. Utilisation d'un préimprégné ou d'un empilement de préimprégnés selon l'une quelconque des revendications 1 à 5 pour la production de structures de turbines éoliennes.

8. Procédé de durcissement de la résine époxy au sein d'un préimprégné ou d'un empilement de préimprégnés selon l'une quelconque des revendications 1 à 5, le procédé impliquant l'exposition du préimprégné ou de l'empilement de préimprégnés à une température appliquée de manière externe dans la plage de 40 °C à 110 °C, préférablement de 70 °C à 110 °C, plus préférablement de 60 °C à 90 °C et/ou une combinaison des températures susmentionnées pendant jusqu'à 8 heures à une pression inférieure à 3,0 bars absolus, ladite résine contenant de 0,5 à 10 % en poids d'un agent durcisseur et étant exempte d'un durcisseur latent.

9. Procédé selon la revendication 8 dans lequel la résine époxy a un EEW de 200 à 500.

10. Procédé pour la production de structures de turbines éoliennes comprenant la fourniture d'un préimprégné ou d'un empilement de préimprégnés au sein d'un sac à vide, les préimprégnés comprenant un mélange de renfort fibreux et de 20 % à 85 % en poids d'une résine époxy d'un poids équivalent époxy (EEW) de 150 à 1 500 et contenant de 0,5 à 10 % en poids d'un agent durcisseur, l'agent durcisseur comprenant un agent durcisseur d'urée et un agent durcisseur d'imidazole, et étant exempt de dicyandiamide, et au moins l'un de l'agent durcisseur d'urée et/ou de l'agent durcisseur d'imidazole étant isolé du reste de la résine, le positionnement du sac à vide au sein d'un moule et la création d'un vide au sein du sac avant ou après le positionnement dans le moule et le durcissement de la résine époxy par l'application d'une température appliquée de manière externe dans la plage de 40 °C à 110 °C, préférablement de 70 °C à 110 °C, plus préférablement de 60 °C à 90 °C et/ou une combinaison des températures susmentionnées pendant une période de 4 à 8 heures.

11. Matrice de résine comprenant une résine époxy contenant de 20 % à 85 % en poids d'une résine époxy d'un poids équivalent époxy (EEW) de 150 à 1 500, ladite résine étant durcissable par une température appliquée de manière externe dans la plage de 40 °C à 110 °C, préférablement de 70 °C à 110 °C, plus préférablement de 60 °C à 90 °C et/ou une combinaison des températures susmentionnées, la résine contenant de 0,5 à 5 % en poids d'un agent durcisseur d'urée, préférablement un agent de durcissement de bis urée, et un imidazole, l'agent durcisseur étant exempt de dicyandiamide et au moins l'un de l'agent durcisseur d'urée et/ou de l'agent durcisseur d'imidazole étant isolé du reste de la matrice de résine.

12. Pale de turbine éolienne ou composant produit à partir d'une matrice de résine selon la revendication 11 en combinaison avec un renfort fibreux.
